# FASCICULE DE BREVET EUROPEEN

(11) **EP 2 595 009 B1**
(45) Date de publication et mention de la délivrance du brevet: **13.11.2013**
(21) Numéro de dépôt: 12192783.4
(22) Date de dépôt: 15.11.2012
(51) Int. Cl.: G05B 9/02, F16P 3/14, E05B 47/06, F16P 3/08

(54) **Procédé et système de détection sécurisée d'une étiquette électronique RFID**
-
Method and system for the secure detection of an RFID electronic tag

(30) Priorité: 16.11.2011 FR 1160403
(43) Date de publication de la demande: 22.05.2013
(73) Titulaire: Schneider Electric Industries SAS, 92500 Rueil-Malmaison (FR)
(72) Inventeur: Auger, Marc, 16800 SOYAUX (FR); Nebout, Jean-Marie, 16410 GARAT (FR)
(74) Mandataire: Bié, Nicolas

(56) Documents cités:
- EP-A1- 2 166 485
- WO-A1-2006/049374
- US-A1- 2007 205 861
- US-A1- 2010 127 824

## Description

### Domaine technique de l'invention

La présente invention se rapporte à un procédé et à un système de détection sécurisée d'une étiquette électronique RFID. Le procédé et le système permettent d'associer une étiquette RFID et une station de lecture/écriture de façon sûre et de surveiller la présence de l'étiquette.

### Etat de la technique

Pour sécuriser l'accès à une machine située dans un local, il est connu de prévoir un système de détection sécurisée qui permet de stopper la machine lorsque le moyen d'accès au local est ouvert. Ainsi, lorsqu'une personne entre dans le local, elle n'est pas exposée aux dangers liés au fonctionnement de la machine. Pour arrêter la machine lorsque le moyen d'accès est ouvert, il est connu d'employer des capteurs à codage magnétique. Cependant, ce type de solution n'offre pas toutes les garanties en termes d'infraudabilité.

Pour apporter un niveau d'infraudabilité bien supérieur, il a donc été proposé d'employer des systèmes de détection par RFID (voir par exemple US 2010/01 278 24). Une étiquette électronique RFID est ainsi par exemple fixée au moyen d'accès, tandis qu'une station de lecture/écriture est fixée sur le bâti du moyen d'accès. Lorsque l'étiquette électronique RFID se trouve dans le champ de la station, cela signifie que le moyen d'accès est fermé et la machine est alors autorisée à fonctionner. Cependant, cette solution présente certains inconvénients, liés notamment au temps de traitement des données lues dans l'étiquette et aux risques de collision avec des étiquettes présentes à proximité.

Le but de l'invention est donc de proposer une solution qui permet de détecter de façon sûre, rapide et robuste la présence d'une étiquette électronique RFID.

### Exposé de l'invention

Ce but est atteint par un procédé de détection sécurisée mis en oeuvre dans un système de détection sécurisée destiné à détecter la présence d'une étiquette électronique RFID, ledit système comportant une station de lecture/écriture, ladite station de lecture/écriture comprenant une interface de communication RFID destinée à échanger des données avec l'étiquette électronique RFID, des premiers moyens de traitement connectés à l'interface de communication RFID et des seconds moyens de traitement connectés à l'interface de communication RFID, ledit procédé comportant :
- une étape de mémorisation par les premiers moyens de traitement et par les seconds moyens de traitement d'un identifiant unique de l'étiquette électronique RFID et de mémorisation de données de contrôle associées à cet identifiant unique,
- une étape d'écriture commandée par les premiers moyens de traitement pour écrire les données de contrôle dans l'étiquette électronique RFID,
- une étape de lecture mise en oeuvre en parallèle par les premiers moyens de traitement et par les seconds moyens de traitement pour lire les données de contrôle envoyées par l'étiquette électronique RFID lorsque l'étiquette électronique RFID se trouve dans le champ de la station de lecture/écriture,
- une étape de vérification mise en oeuvre par les premiers moyens de traitement et les seconds moyens de traitement pour effectuer une vérification des données de contrôle lues par rapport aux données de contrôle mémorisées lors de l'étape de mémorisation,
- une étape de génération par les premiers moyens de traitement et par les seconds moyens de traitement de deux signaux de sortie tenant compte de la vérification effectuée lors de l'étape de vérification.

Selon une particularité, le procédé comporte une étape de sélection et d'activation de l'étiquette électronique RFID mise en oeuvre par lecture et vérification par les premiers moyens de traitement et les seconds moyens de traitement de l'identifiant unique mémorisé dans l'étiquette électronique RFID.

L'invention concerne également un système de détection sécurisée d'une étiquette électronique RFID mémorisant un identifiant unique, le système comportant une station de lecture/écriture, ladite station de lecture/écriture comportant :
- une interface de communication RFID destinée à échanger des données avec l'étiquette électronique RFID,
- des premiers moyens de traitement connectés à l'interface de communication RFID et comportant des moyens de mémorisation de l'identifiant unique et de données de contrôle associées à cet identifiant unique, des moyens d'écriture des données de contrôle (DC) dans l'étiquette (ET1) électronique RFID et des moyens de lecture pour lire les données de contrôle mémorisées dans l'étiquette électronique,

- des seconds moyens de traitement connectés à l'interface de communication et comportant des moyens de mémorisation de l'identifiant unique et des données de contrôle de l'étiquette électronique, et des moyens de lecture pour lire lesdites données de contrôle mémorisées dans l'étiquette électronique RFID,
- les premiers moyens de traitement et les seconds moyens de traitement comportant des moyens de vérification des données de contrôle lues dans l'étiquette électronique RFID par rapport aux données de contrôle mémorisées dans les moyens de mémorisation,
- des moyens de génération de signaux de sortie, activés par les premiers moyens de traitement et par les seconds moyens de traitement en fonction de la vérification effectuée par les moyens de vérification.

Selon une particularité, les premiers moyens de traitement et les seconds moyens de traitement comportent des moyens de lecture et de vérification de l'identifiant unique de l'étiquette électronique RFID.

Selon une autre particularité, l'interface de communication RFID comporte une antenne.

Selon une autre particularité, le système comporte un bus série installé entre l'interface de communication RFID, les premiers moyens de traitement et les seconds moyens de traitement.

Selon une variante de réalisation, le système comporte un bus parallèle installé entre l'interface de communication RFID, les premiers moyens de traitement et les seconds moyens de traitement.

Selon une autre particularité, le système comporte un canal de communication installé entre les premiers moyens de traitement et les seconds moyens de traitement.

Selon une autre particularité, l'étiquette électronique RFID est fixée sur un moyen d'accès à une zone dangereuse et la station de lecture/écriture est fixée sur le bâti du moyen d'accès.

### Brève description des figures

D'autres caractéristiques et avantages vont apparaître dans la description détaillée qui suit faite en regard des dessins annexés dans lesquels :
- la figure 1 représente, de manière schématique, le système de détection de l'invention,
- les figures 2A et 2B représentent le système de détection de l'invention appliqué à la détection de l'état d'un moyen d'accès à une zone dangereuse, respectivement à l'état moyen d'accès ouvert et à l'état moyen d'accès fermé.

### Description détaillée d'au moins un mode de réalisation

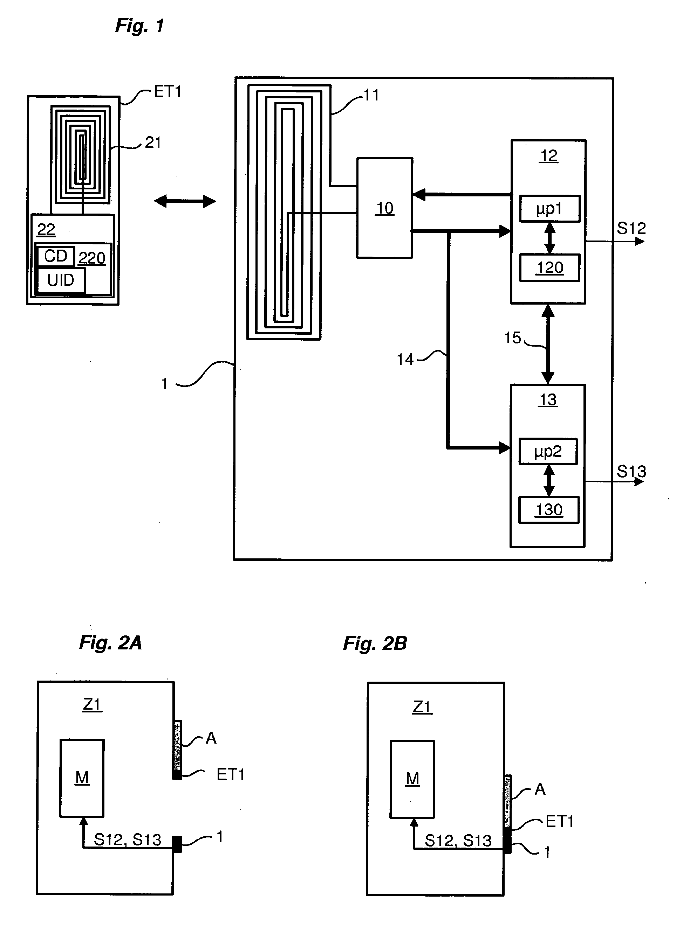

L'invention concerne un système de détection qui peut par exemple être employé pour sécuriser l'accès à une zone dangereuse Z1. Comme représenté sur les figures 2A et 2B, ce système de détection est par exemple positionné pour connaître l'état d'un moyen d'accès A à la zone dangereuse Z1. Si une machine M est placée dans la zone dangereuse, la machine doit être stoppée et non autorisée à fonctionner lorsque le moyen d'accès A est ouvert. Le moyen d'accès A peut être coulissant, battant ou à tourniquet. Pour garantir un haut niveau d'infraudabilité, le système de détection de l'invention est de type RFID. De plus, il comporte une solution de redondance, ce qui permet par exemple d'être sûr de l'état de fermeture du moyen d'accès A de la zone dangereuse Z1, sans risquer de mettre le système en défaut.

Dans la suite de la description, le système de détection de l'invention est décrit dans son application à la surveillance de l'état du moyen d'accès A à la zone dangereuse Z1.

Selon l'invention, le système de détection comporte une étiquette ET1 électronique RFID par exemple fixée sur le moyen d'accès A et une station 1 de lecture/écriture RFID fixée sur le bâti du moyen d'accès A. L'inverse aurait également été possible. Avec un moyen d'accès en tourniquet, plusieurs étiquettes électroniques pourraient être employées pour surveiller l'état ouvert ou fermé de l'accès à la zone dangereuse.

Dans la suite de la description, nous nous intéresserons à une solution employant une seule étiquette ET1 électronique RFID.

La technologie RFID est bien connue. De manière générale, une station 1 de lecture/écriture RFID possède une antenne formée par un circuit oscillant dans lequel on peut créer ou capter un champ magnétique qui permet une communication sans fil par couplage magnétique (appelé aussi couplage inductif) avec tout circuit oscillant placé dans une zone de dialogue de la station, par exemple avec l'antenne d'une étiquette électronique RFID. Généralement, les données binaires sont échangées entre une station et une étiquette électronique RFID par une modulation en amplitude et/ou en phase de la fréquence porteuse du signal magnétique.

Une étiquette électronique RFID est ainsi capable de recevoir un signal radio et de renvoyer en réponse un signal différent contenant une information pertinente. Elle possède une mémoire qui permet de stocker diverses informations d'identification, de reconnaissance et/ou de process, notamment un identifiant unique UID. Certaines étiquettes permettent uniquement une lecture de données préalablement stockées lorsqu'une station est placée à proximité mais d'autres permettent en plus une écriture de données (écriture unique ou multiple) qui seront stockées dans l'étiquette.

Par ailleurs, dans le cas d'une étiquette électronique RFID dite passive, le signal électromagnétique (porteuse) créé par l'antenne de la station RFID sert à alimenter électriquement l'étiquette lorsque celle-ci est dans la zone de dialogue de la station. L'énergie captée par l'antenne de l'étiquette est en effet transformée en énergie électrique qui alimente les circuits internes (mémoire, unité de traitement,...) de cette étiquette. En s'alimentant avec l'énergie produite par le champ électromagnétique de la station, l'étiquette présente donc l'avantage de ne pas nécessiter d'alimentation interne telle qu'une pile ou une batterie.

Sur la figure 1, l'étiquette ET1 électronique comporte une antenne 21 et des moyens de traitement 22, les moyens de traitement 22 comportant une mémoire 220.

Préférentiellement, dans la solution de l'invention, l'étiquette ET1 électronique RFID est de type passive et fonctionne à une fréquence de 13,56 MHz.

En référence à la figure 1, le système de détection de l'invention utilise une seule étiquette ET1 électronique RFID et la station 1 de lecture/écriture comporte une interface 10 de communication RFID dotée d'une antenne 11, des premiers moyens de traitement 12 et des seconds moyens de traitement 13. Les premiers moyens de traitement 12 comportent par exemple un premier microprocesseur µp1 et des premiers moyens de mémorisation 120 et les seconds moyens de traitement 13 comportent un second microprocesseur µp2 et des seconds moyens de mémorisation 130.

L'interface de communication RFID permet de communiquer avec l'étiquette ET1 électronique RFID. Elle réalise la modulation en amplitude et/ou en phase de la fréquence porteuse du signal magnétique émis par l'antenne 11. Les premiers moyens de traitement 12 et les seconds moyens de traitement 13 sont connectés à l'interface de communication RFID, par exemple via un bus 14 série, par exemple de type SPI ("Serial Peripheral Interface"). Les premiers moyens de traitement 12 comportent des moyens de génération de commandes à destination de l'étiquette ET1 électronique RFID et des moyens de lecture des réponses envoyées par l'étiquette ET1 électronique RFID. Les seconds moyens de traitement 13 comportent des moyens de lecture des réponses envoyées par l'étiquette ET1 électronique RFID.

Le système comporte également un canal de communication 15 s'étendant entre les premiers moyens de traitement 12 et les seconds moyens de traitement 13 et qui permet aux moyens de traitement de communiquer entre eux et d'échanger des données. Les premiers moyens de traitement 12, les seconds moyens de traitement 13 et l'interface 10 de communication RFID sont synchronisés entre eux par un signal d'horloge.

Le principe de fonctionnement du système de détection de l'invention est décrit ci-dessous.

L'étiquette ET1 électronique RFID fixée sur le moyen d'accès A est tout d'abord apprise par la station 1 de lecture/écriture lors d'une phase de configuration. Les premiers moyens de traitement 12 et les seconds moyens de traitement 13 mémorisent tous les deux dans leurs moyens de mémorisations 120, 130 l'identifiant unique UID de l'étiquette ET1 électronique RFID. Lors de la phase de configuration, les premiers moyens de traitement 12 et les seconds moyens de traitement 13 vérifient qu'ils ont bien lu le même identifiant unique UID en communiquant via le canal de communication 15. Ainsi, en fonctionnement normal, seule l'étiquette ET1 électronique RFID qui a été apprise sera adressée. Toute autre étiquette électronique située dans le champ ne sera pas considérée par la station.

Lors de cette phase de configuration, les premiers moyens de traitement 12 créent, pour cette étiquette ET1 électronique RFID, des données de contrôle CD spécifiques et envoient, via l'interface 10 de communication RFID, une commande d'écriture de ces données de contrôle CD spécifiques dans l'étiquette ET1 électronique RFID. Ce sont ces données de contrôle CD spécifiques qui seront lues à chaque fois par les premiers moyens de traitement 12 et les seconds moyens de traitement 13 lorsque la machine M est en fonctionnement. Cela évite aux premiers et seconds moyens de traitement 12, 13 d'avoir à lire à chaque fois tout l'identifiant unique UID de l'étiquette électronique RFID (ce qui ralentirait la durée de traitement).

Lors de la phase de configuration, les données de contrôle CD écrites sont relues par les premiers moyens de traitement 12 et les seconds moyens de traitement 13 et sauvegardées par les premiers moyens de traitement 12 et les seconds moyens de traitement 13 dans leurs moyens de mémorisation 120, 130, en correspondance avec l'identifiant unique UID de l'étiquette ET1 électronique RFID. Les premiers moyens de traitement 12 et les seconds moyens de traitement 13 vérifient également que les données de contrôle CD qu'ils ont lues sont identiques en communiquant via le canal de communication 15. Les données de contrôle CD peuvent être constituées de plusieurs octets et de leur inverse.

Une fois la phase de configuration terminée, le système est prêt à fonctionner normalement. Selon la position du moyen d'accès A, l'étiquette ET1 électronique RFID se trouve ou non dans le champ de la station 1 de lecture/écriture et permet de déterminer si la machine M doit être maintenue à l'arrêt, maintenue en fonctionnement, autorisée à démarrer ou arrêtée. Pour cela, la station génère deux signaux de sortie, un premier signal de sortie S12 généré par les premiers moyens de traitement 12 et un second signal de sortie S13 généré par les seconds moyens de traitement 13. Si au moins l'un des deux signaux de sortie S12, S13 est à l'état 0, la machine doit être arrêtée ou maintenue à l'arrêt. Si les deux signaux de sortie S12, S13 sont à l'état 1, la machine est autorisée à démarrer ou est maintenue en fonctionnement.

Selon l'invention, trois cas de fonctionnement peuvent être distingués :

### 1) Premier cas de fonctionnement : Machine arrêtée et moyen d'accès A ouvert

Le moyen d'accès A étant ouvert, l'étiquette ET1 électronique RFID n'est pas dans le champ de la station 1 de lecture/écriture. L'étiquette ET1 électronique RFID n'est pas alimentée par la station 1 et est donc désactivée. La station 1 de lecture/écriture tente de détecter l'étiquette ET1 électronique RFID préalablement apprise lors de la phase de configuration en envoyant des requêtes de lecture de l'identifiant unique UID de cette étiquette. Ces requêtes restant sans réponse, la station 1 de lecture/écriture génère les deux signaux de sortie S12, S13 synonymes que la machine M doit être maintenue à l'arrêt (figure 2A).

### 2) Deuxième cas de fonctionnement : Machine arrêtée et moyen d'accès A fermé

L'étiquette ET1 électronique RFID se trouve dans le champ de la station 1 de lecture/écriture. Si le moyen d'accès A était précédemment ouvert, la station 1 de lecture/écriture doit d'abord sélectionner l'étiquette ET1 électronique RFID et l'activer. Pour cela, la station 1 de lecture/écriture envoie des requêtes de lecture de l'identifiant unique UID de l'étiquette ET1 électronique RFID. Les premiers moyens de traitement 12 et les seconds moyens de traitement 13 s'assurent alors d'avoir lu le même identifiant unique UID et que cet identifiant unique UID correspond bien à celui mémorisé dans leurs moyens de mémorisation 120, 130. Si l'identifiant unique UID lu par les premiers moyens de traitement 12 et l'identifiant unique UID lu par les seconds moyens de traitement 13 ne sont pas identiques ou si l'identifiant unique UID lu par les premiers moyens de traitement ou par les seconds moyens de traitement ne correspond pas à celui mémorisé dans leurs moyens de mémorisation, la station 1 de lecture/écriture génère les deux signaux de sortie S12, S13, synonymes que la machine doit rester arrêtée.

Une fois l'étiquette activée et vérifiée, la station doit lire les données de contrôle CD de l'étiquette ET1 électronique RFID activée. La station de lecture/écriture 1 permet de réaliser une double lecture de l'étiquette ET1 électronique RFID. Pour cela, les premiers moyens de traitement 12 génèrent une commande de récupération des données de contrôle CD, ladite commande étant envoyée par l'interface 10 de communication RFID à destination de l'étiquette ET1 électronique RFID. En réponse à la commande, l'étiquette ET1 électronique RFID envoie ses données de contrôle CD. Les données de contrôle CD reçues par l'interface de communication RFID sont lues en parallèle par les premiers moyens de traitement 12 et les seconds moyens de traitement 13. Les premiers moyens de traitement 12 et les seconds moyens de traitement 13 peuvent vérifier en parallèle l'intégrité des données de contrôle reçues et vérifient en parallèle si ces données de contrôle CD reçues correspondent bien aux données de contrôle CD mémorisées dans leurs moyens de mémorisation 120, 130. Les premiers moyens de traitement 12 et les seconds moyens de traitement 13 échangent ensuite sur le résultat de leur vérification via le canal de communication 15.

Si les données de contrôle CD analysées par les premiers moyens de traitement 12 ou par les seconds moyens de traitement 13 ne correspondent pas aux données de contrôle mémorisées, la station 1 de lecture/écriture génère les deux signaux de sortie S12, S13, synonymes que la machine M doit être maintenue arrêtée.

Si les données de contrôle CD analysées par chacun des deux moyens de traitement 12, 13 correspondent bien aux données de contrôle CD mémorisées, la station 1 de lecture/écriture génère les deux signaux de sortie S12, S13, synonymes que la machine M est autorisée à démarrer.

### 3) Troisième cas de fonctionnement : Machine en fonctionnement et moyen d'accès A fermé

Dans ce cas, comme l'étiquette ET1 électronique RFID a déjà été sélectionnée et activée, la station 1 de lecture/écriture lit alors seulement les données de contrôle CD de l'étiquette ET1 électronique RFID. La vérification des données de contrôle CD est réalisée comme décrit ci-dessus pour le deuxième cas de fonctionnement. Si les données de contrôle CD lues correspondent aux données de contrôle CD mémorisées par les premiers moyens de traitement 12 et par les seconds moyens de traitement 13, la station 1 de lecture/écriture génère les signaux de sortie S12, S13 représentatifs de l'état moyen d'accès A fermé et synonymes que la machine M peut continuer à fonctionner. Si les données de contrôle lues ne sont pas conformes à celles mémorisées ou si les premiers moyens de traitement 12 et les seconds moyens de traitement 13 n'ont pas lu les mêmes données de contrôle CD, la station 1 de lecture/écriture génère les signaux de sortie S12, S13 synonymes que la machine doit être arrêtée.

La solution de l'invention présente donc plusieurs avantages, qui sont listés ci-dessous :
- insensibilité à l'introduction d'une autre étiquette électronique RFID dans le champ de la station, l'étiquette électronique RFID du système étant précédemment apprise lors de la phase de configuration du système, le protocole de communication ciblant uniquement l'étiquette activée,
- rapidité de détection car seules les données de contrôle CD sont lues lorsque la machine M est en fonctionnement et aucun mécanisme d'anticollision n'est nécessaire,
- faible coût et faible encombrement grâce à l'emploi d'une seule étiquette électronique RFID,
- facilité de mise en oeuvre car une seule étiquette électronique RFID doit être installée et un seul couplage doit être réalisé entre la station 1 de lecture/écriture et l'étiquette ET1 électronique RFID,
- fonctionnement fiable car l'emploi d'une seule interface 10 de communication RFID permet d'éviter les risques d'interférences et les problèmes de synchronisme.

## Revendications

1. Procédé de détection sécurisée mis en oeuvre dans un système de détection sécurisée destiné à détecter la présence d'une étiquette (ET1) électronique RFID, ledit système comportant une station (1) de lecture/écriture, ladite station de lecture/écriture comprenant une interface (10) de communication RFID destinée à échanger des données avec l'étiquette (ET1) électronique RFID, des premiers moyens de traitement (12) connectés à l'interface (10) de communication RFID et des seconds moyens de traitement (13) connectés à l'interface (10) de communication RFID, ledit procédé comportant :
- une étape de mémorisation par les premiers moyens de traitement (12) et par les seconds moyens de traitement (13) d'un identifiant unique (UID) de l'étiquette (ET1) électronique RFID et de mémorisation de données de contrôle (CD) associées à cet identifiant unique,
- une étape d'écriture commandée par les premiers moyens de traitement (12) pour écrire les données de contrôle (CD) dans l'étiquette (ET1) électronique RFID,
- une étape de lecture mise en oeuvre en parallèle par les premiers moyens de traitement (12) et par les seconds moyens de traitement (13) pour lire les données de contrôle (CD) envoyées par l'étiquette électronique RFID lorsque l'étiquette (ET1) électronique RFID se trouve dans le champ de la station (1) de lecture/écriture,
- une étape de vérification mise en oeuvre par les premiers moyens de traitement (12) et les seconds moyens de traitement (13) pour effectuer une vérification des données de contrôle (CD) lues par rapport aux données de contrôle (CD) mémorisées lors de l'étape de mémorisation,
- une étape de génération par les premiers moyens de traitement (12) et par les seconds moyens de traitement de deux signaux de sortie (S12, S13) tenant compte de la vérification effectuée lors de l'étape de vérification.

2. Procédé selon la revendication 1, **caractérisé en ce qu'il** comporte une étape de sélection et d'activation de l'étiquette (ET1) électronique RFID mise en oeuvre par lecture et vérification par les premiers moyens de traitement (12) et les seconds moyens de traitement (13) de l'identifiant unique (UID) mémorisé dans l'étiquette (ET1) électronique RFID.

3. Système de détection sécurisée d'une étiquette (ET1) électronique RFID mémorisant un identifiant unique (UID), le système comportant une station (1) de lecture/écriture, ladite station de lecture/écriture comportant :
- une interface (10) de communication RFID destinée à échanger des données avec l'étiquette électronique RFID,
- des premiers moyens de traitement (12) connectés à l'interface (10) de communication RFID et comportant des moyens de mémorisation (120) de l'identifiant unique (UID) et de données de contrôle (CD) associées à cet identifiant unique, des moyens d'écriture des données de contrôle (CD) dans l'étiquette (ET1) électronique RFID et des moyens de lecture pour lire les données de contrôle (CD) mémorisées dans l'étiquette (ET1) électronique,
- des seconds moyens de traitement (13) connectés à l'interface (10) de communication et comportant des moyens de mémorisation (130) de l'identifiant unique (UID) et des données de contrôle (CD), et des moyens de lecture pour lire les données de contrôle (CD) mémorisées dans l'étiquette électronique RFID,
- les premiers moyens de traitement (12) et les seconds moyens de traitement (13) comportant des moyens de vérification des données de contrôle (CD) lues dans l'étiquette (ET1) électronique RFID par rapport aux données de contrôle (CD) mémorisées dans les moyens de mémorisation (120, 130),
- des moyens de génération de signaux de sortie (S12, S13), activés par les premiers moyens de traitement (12) et par les seconds moyens de traitement (13) en fonction de la vérification effectuée par les moyens de vérification.

4. Système selon la revendication 3, **caractérisé en ce que** les premiers moyens de traitement (12) et les seconds moyens de traitement (13) comportent des moyens de lecture et de vérification de l'identifiant unique (UID) de l'étiquette (ET1) électronique RFID.

5. Système selon l'une des revendications 3 ou 4, **caractérisé en ce que** l'interface (10) de communication RFID comporte une antenne (11).

6. Système selon l'une des revendications 3 à 5, **caractérisé en ce qu'il** comporte un bus (14) série installé entre l'interface (10) de communication RFID, les premiers moyens de traitement (12) et les seconds moyens de traitement (13).

7. Système selon l'une des revendications 3 à 5, **caractérisé en ce qu'il** comporte un bus parallèle installé entre l'interface (10) de communication RFID, les premiers moyens de traitement (12) et les seconds moyens de traitement (13).

8. Système selon l'une des revendications 3 à 6, **caractérisé en ce qu'il** comporte un canal de communication (15) installé entre les premiers moyens de traitement (12) et les seconds moyens de traitement (13).

9. Système de détection selon l'une des revendications 3 à 7, **caractérisé en ce que** l'étiquette (ET1) électronique RFID est fixée sur un moyen d'accès (A) à une zone dangereuse (Z1) et **en ce que** la station (1) de lecture/écriture est fixée sur le bâti du moyen d'accès (A).

## Patentansprüche

1. Verfahren zur gesicherten Erfassung, das in einem System zur gesicherten Erfassung angewendet wird, welches zur Erfassung des Vorhandenseins eines elektronischen RFID-Etiketts (ET1) bestimmt ist, wobei das System eine Schreib-/Lesestation (1) aufweist, wobei die Schreib-/Lesestation eine RFID-Kommunikationsschnittstelle (10), die dazu bestimmt ist, mit dem elektronischen RFID-Etikett (ET1) Daten auszutauschen, erste mit der RFID-Kommunikationsschnittstelle (10) verbundene Verarbeitungseinrichtungen (12) und zweite mit der RFID-Kommunikationsschnittstelle (10) verbundene Verarbeitungseinrichtungen (13) enthält, wobei das Verfahren aufweist:
- einen Schritt der Speicherung durch die ersten Verarbeitungseinrichtungen (12) und durch die zweiten Verarbeitungseinrichtungen (13) einer eindeutigen Kennung (UID) des elektronischen RFID-Etiketts (ET1) und der Speicherung von dieser eindeutigen Kennung zugeordneten Kontrolldaten (CD),
- einen von den ersten Verarbeitungseinrichtungen (12) gesteuerten Schreibschritt, um die Kontrolldaten (CD) in das elektronische RFID-Etikett (ET1) einzuschreiben,
- einen parallel von den ersten Verarbeitungseinrichtungen (12) und von den zweiten Verarbeitungseinrichtungen (13) angewendeten Leseschritt, um die vom elektronischen RFID-Etikett gesendeten Kontrolldaten (CD) zu lesen, wenn das elektronische RFID-Etikett (ET1) sich im Feld der Schreib-/Lesestation (1) befindet,
- einen von den ersten Verarbeitungseinrichtungen (12) und den zweiten Verarbeitungseinrichtungen (13) angewendeten Überprüfungsschritt, um eine Überprüfung der gelesenen Kontrolldaten (CD) im Vergleich mit den im Speicherschritt gespeicherten Kontrolldaten (CD) durchzuführen,
- einen Schritt der Erzeugung von zwei Ausgangssignalen (S12, S13) durch die ersten Verarbeitungseinrichtungen (12) und durch die zweiten Verarbeitungseinrichtungen unter Berücksichtigung der im Überprüfungsschritt durchgeführten Überprüfung.

2. Verfahren nach Anspruch 1, **dadurch gekennzeichnet, dass** es einen Schritt der Auswahl und der Aktivierung des elektronischen RFID-Etiketts (ET1) aufweist, der durch Lesen und Überprüfen durch die ersten Verarbeitungseinrichtungen (12) und die zweiten Verarbeitungseinrichtungen (13) der im elektronischen RFID-Etikett (ET1) gespeicherten eindeutigen Kennung (UID) angewendet wird.

3. System zur gesicherten Erfassung eines elektronischen RFID-Etiketts (ET1), das eine eindeutige Kennung (UID) speichert, wobei das System eine Schreib-/Lesestation (1) aufweist, wobei die Schreib-/Lesestation aufweist:
- eine RFID-Kommunikationsschnittstelle (10), die dazu bestimmt ist, Daten mit dem elektronischen RFID-Etikett auszutauschen,
- erste Verarbeitungseinrichtungen (12), die mit der RFID-Kommunikationsschnittstelle (10) verbunden sind und Speichereinrichtungen (120) der eindeutigen Kennung (UID) und dieser eindeutigen Kennung zugeordneter Kontrolldaten (CD), Schreibeinrichtungen der Kontrolldaten (CD) in das elektronische RFID-Etikett (ET1) und Leseeinrichtungen aufweisen, um die im elektronischen Etikett (ET1) gespeicherten Kontrolldaten (CD) zu lesen,
- zweite Verarbeitungseinrichtungen (13), die mit der Kommunikationsschnittstelle (10) verbunden sind und Speichereinrichtungen (130) der eindeutigen Kennung (UID) und der Kontrolldaten (CD) und Leseeinrichtungen enthalten, um die im elektronischen RFID-Etikett gespeicherten Kontrolldaten (CD) zu lesen,
- wobei die ersten Verarbeitungseinrichtungen (12) und die zweiten Verarbeitungseinrichtungen (13) Überprüfungseinrichtungen der im elektronischen RFID-Etikett (ET1) gelesenen Kontrolldaten (CD) im Vergleich mit den in den Speichereinrichtungen (120, 130) gespeicherten Kontrolldaten (CD) aufweisen,
- Einrichtungen zur Erzeugung von Ausgangssignalen (S12, S13), die von den ersten Verarbeitungseinrichtungen (12) und von den zweiten Verarbeitungseinrichtungen (13) abhängig von der durch die Überprüfungseinrichtungen durchgeführten Überprüfung aktiviert werden.

4. System nach Anspruch 3, **dadurch gekennzeichnet, dass** die ersten Verarbeitungseinrichtungen (12) und die zweiten Verarbeitungseinrichtungen (13) Lese- und Überprüfungseinrichtungen der eindeutigen Kennung (UID) des elektronischen RFID-Etiketts (ET1) aufweisen.

5. System nach einem der Ansprüche 3 oder 4, **dadurch gekennzeichnet, dass** die RFID-Kommunikationsschnittstelle (10) eine Antenne (11) aufweist.

6. System nach einem der Ansprüche 3 bis 5, **dadurch gekennzeichnet, dass** es einen seriellen Bus (14) aufweist, der zwischen der RFID-Kommunikationsschnittstelle (10), den ersten Verarbeitungseinrichtungen (12) und den zweiten Verarbeitungseinrichtungen (13) installiert ist.

7. System nach einem der Ansprüche 3 bis 5, **dadurch gekennzeichnet, dass** es einen parallelen Bus aufweist, der zwischen der RFID-Kommunikationsschnittstelle (10), den ersten Verarbeitungseinrichtungen (12) und den zweiten Verarbeitungseinrichtungen (13) installiert ist.

8. System nach einem der Ansprüche 3 bis 6, **dadurch gekennzeichnet, dass** es einen Kommunikationskanal (15) aufweist, der zwischen den ersten Verarbeitungseinrichtungen (12) und den zweiten Verarbeitungseinrichtungen (13) installiert ist.

9. Erfassungssystem nach einem der Ansprüche 3 bis 7, **dadurch gekennzeichnet, dass** das elektronische RFID-Etikett (ET1) an einer Zugangseinrichtung (A) zu einer Gefahrenzone (Z1) befestigt ist, und dass die Schreib-/Lesestation (1) auf dem Gestell der Zugangseinrichtung (A) befestigt ist.

## Claims

1. Secure detection method implemented in a secure detection system designed to detect the presence of an RFID electronic tag (ET1), said system comprising a read/write station (1), said read/write station comprising an RFID communication interface (10) designed to exchange data with the RFID electronic tag (ET1), first processing means (12) connected to the RFID communication interface (10) and second processing means (13) connected to the RFID communication interface (10), said method comprising:
- a step of storage, by the first processing means (12) and by the second processing means (13), of a unique identifier (UID) of the RFID electronic tag (ET1) and of storage of control data (CD) associated with this unique identifier,
- a writing step controlled by the first processing means (12) for writing the control data (CD) in the RFID electronic tag (ET1),
- a reading step implemented in parallel by the first processing means (12) and by the second processing means (13) for reading the control data (CD) sent by the RFID electronic tag when the RFID electronic tag (ET1) is located within the field of the read/write station (1),
- a checking step implemented by the first processing means (12) and the second processing means (13) for performing a check on the control data (CD) read against the control data (CD) stored during the storage step,
- a step of generation, by the first processing means (12) and by the second processing means, of two output signals (S12, S13) taking into account the check performed during the checking step.

2. Method according to Claim 1, **characterized in that** it comprises a step of selection and of activation of the RFID electronic tag (ET1) implemented by the reading and checking, by the first processing means (12) and the second processing means (13), of the unique identifier (UID) stored in the RFID electronic tag (ET1).

3. System for the secure detection of an RFID electronic tag (ET1) storing a unique identifier (UID), said system comprising a read/write station (1), said read/write station comprising:
- an RFID communication interface (10) designed to exchange data with the RFID electronic tag,
- first processing means (12) connected to the RFID communication interface (10) and comprising means (120) for storing the unique identifier (UID) and control data (CD) associated with this unique identifier, means for writing control data (CD) in the RFID electronic tag (ET1) and reading means for reading the control data (CD) stored in the electronic tag (ET1),
- second processing means (13) connected to the communication interface (10) and comprising means (130) for storing the unique identifier (UID) and control data (CD), and reading means for reading the control data (CD) stored in the RFID electronic tag,
- the first processing means (12) and the second processing means (13) comprising means for checking the control data (CD) read in the RFID electronic tag (ET1) against the control data (CD) stored in the storage means (120, 130),
- means for generating output signals (S12, S13), activated by the first processing means (12) and by the second processing means (13) on the basis of the check performed by the checking means.

4. System according to Claim 3, **characterized in that** the first processing means (12) and the second processing means (13) comprise means for reading and checking the unique identifier (UID) of the RFID electronic tag (ET1).

5. System according to one of Claims 3 or 4, **characterized in that** the RFID communication interface (10) comprises an antenna (11).

6. System according to one of Claims 3 to 5, **characterized in that** it comprises a serial bus (14) installed between the RFID communication interface (10), the first processing means (12) and the second processing means (13).

7. System according to one of Claims 3 to 5, **characterized in that** it comprises a parallel bus installed between the RFID communication interface (10), the first processing means (12) and the second processing means (13).

8. System according to one of Claims 3 to 6, **characterized in that** it comprises a communication channel (15) installed between the first processing means (12) and the second processing means (13).

9. Detection system according to one of Claims 3 to 7, **characterized in that** the RFID electronic tag (ET1) is fixed to an access means (A) to a hazardous area (Z1) and **in that** the read/write station (1) is fixed to the frame of the access means (A).
